# EUROPÄISCHE PATENTSCHRIFT

(11) **EP 1 981 671 B1**
(45) Veröffentlichungstag und Bekanntmachung des Hinweises auf die Patenterteilung: **24.06.2009**
(21) Anmeldenummer: 06828726.7
(22) Anmeldetag: 23.12.2006
(51) Int. Cl.: B23B 31/12

(54) **BOHRFUTTER**
DRILL CHUCK
MANDRIN DE PERCEUSE

(43) Veröffentlichungstag der Anmeldung: 22.10.2008
(73) Patentinhaber: Röhm GmbH, 89567 Sontheim (DE)
(72) Erfinder: Mack, Hans-Dieter, 89567 Sontheim (DE)
(74) Vertreter: Hentrich, Swen
(86) Internationale Anmeldenummer: PCT/DE2006/002313
(87) Internationale Veröffentlichungsnummer: WO 2008/077362

(56) Entgegenhaltungen:
- EP-A- 0 710 518
- EP-A- 1 314 499
- US-A- 5 741 016

## Beschreibung

Die Erfindung betrifft ein Bohrfutter, insbesondere zum Schlagbohren, mit einem an eine Bohrspindel anschließbaren Futterkörper, in dem in geneigt zur Futterachse verlaufenden Führungsaufnahmen zwischen sich eine Aufnahme für das Bohrwerkzeug bildende Spannbacken angeordnet sind, die mit einer Zahnreihe zum Öffnen und Schließen des Bohrfutters in das Gewinde eines am Futterkörper drehbar geführten Gewinderings eingreifen, ferner mit einer Sperreinrichtung für den Gewindering, bestehend aus einem koaxialen Kranz von Sperrausnehmungen und aus mindestens einem Sperrglied, das in der Sperrstellung unter der Kraft einer Sperrfeder in die Sperrausnehmungen eingerückt ist,
wobei das Sperrglied und die Sperrausnehmungen.einander in derart geneigten Flankenflächen anliegen, daß diese den Gewindering in der dem Öffnen des Bohrfutters entsprechenden Drehrichtung gegen Verdrehen sperren, beim Verdrehen des Gewinderings in der entgegen gesetzten, also dem Schließen des Bohrfutters entsprechenden Drehrichtung aber das Sperrglied gegen die Kraft der Sperrfeder aus den Sperrausnehmungen herausdrücken und dadurch von Sperrausnehmung zu Sperrausnehmung verrutschen lassen, weiter mit einem zwischen ersten Anschlägen begrenzt gegenüber dem Gewindering verdrehbaren koaxialen Stellring, und mit einer in Umfangsrichtung zwei Raststellungen für den Stellring bildenden Rasteinrichtung.

Ein derartiges Bohrfutter ist aus der EP 0 710 518 A2 bekannt, das sich in der Praxis hervorragend bewährt hat und aufgrund seiner Robustheit und Zuverlässigkeit in sehr hohen Stückzahlen verkauft worden ist. Diese vorgenannten Vorteile sind verbunden mit einer sehr einfachen Bedienbarkeit für den Nutzer, da beim Lösen und Spannen des Bohrfutters die Sperreinrichtung zwangsbetätigt wird, also der Nutzer nur den Stellring ergreifen und in der einen oder anderen Richtung verdrehen muss. Durch die Sperreinrichtung ist im Bohrbetrieb mit hohen Beanspruchungen, insbesondere beim Schlagbohren, eine sichere Einspannung des Bohrwerkzeuges gewährleistet, auch wenn starke Vibrationen auf das Bohrfutter einwirken. Allerdings ist zu beachten, dass Bohrfutter verstärkt auch an nicht-netzgebundenen, batteriebetriebenen Bohrmaschinen zum Schrauben eingesetzt werden. Im Schraubbetrieb ist die Belastung des Bohrfutters deutlich reduziert und die Verwendung einer Sperreinrichtung nicht zwingend erforderlich. Da beim Einspannen eines Werkzeuges, beispielsweise eines Schrauberbits, sich zuerst die Spannbacken an den Werkzeugschaft anlegen und durch die dann auftretende Erhöhung des Drehwiderstandes die Sperreinrichtung mit dem Eingriff des Sperrgliedes in die Sperrausnehmung aktiviert wird, ratscht das Sperrglied bis zum Erreichen der gewünschten Spannkraft über die Sperrausnehmungen. Dies ist mit einem Verschleiss sowohl der Sperrausnehmungen als auch der Sperrgliedes verbunden, der beim Einsatz des Bohrfutters zum Schrauben unnötig ist.

Der Erfindung liegt daher die Aufgabe zugrunde, ein Bohrfutter der eingangs genannten Art so auszubilden, dass es bei Beibehaltung einer einfachen Bedienbarkeit in das Belieben des Nutzers gestellt ist, ob die Sperreinrichtung aktiviert wird oder nicht, wobei ein möglichst einfacher Aufbau gewahrt bleiben soll.

Diese Aufgabe wird nach der Erfindung bei einem Bohrfutter der eingangs genannten Art dadurch gelöst, dass ein mit Gegenanschlägen zwischen zweiten Anschlägen des Stellringes begrenzt verdrehbarer Sperrring zur Verstellung des Sperrgliedes zwischen der Sperrstellung und der dem aus der Sperrverzahnung ausgerückten Zustand des Sperrgliedes entsprechenden Lösestellung vorgesehen ist, daß der in der dem Öffnen des Bohrfutters entsprechenden Drehrichtung vordere zweite Anschlag in der Sperrstellung dem Gegenanschlag anliegt, und dass die Rasteinrichtung zwischen dem Sperrring und dem Gewindering ausgebildet ist.

Mit einem derartigen Bohrfutter ist der Vorteil verbunden, dass der Nutzer dieses in gewohnter Weise betätigen kann,
wobei es insbesondere beim Öffnen des Bohrfutters keinen Unterschied bedeutet, ob die Sperreinrichtung aktiviert ist oder nicht. Der Nutzer kann also beim Einspannen eines Werkzeuges durch den Stellring die gewünschte Spannkraft erzeugen und sich dann je nach Anwendungsfall entscheiden, ob in der selben Drehrichtung, in der zuvor der Stellring verdreht worden ist, auch der Sperrring verdreht wird, um die Sperreinrichtung zu aktivieren. Wird die Sperreinrichtung aktiviert, liegt der in dem Öffnen des Bohrfutters entsprechenden Drehrichtung vordere zweite Anschlag in der Sperrstellung dem Gegenanschlag an, so dass zum Öffnen des Bohrfutters einfach der Stellring ergriffen und in der dem Öffnen entsprechenden Drehrichtung verstellt werden kann, und zwar ohne dass zuvor der Sperrring erneut betätigt werden muss. Beim Öffnen des Bohrfutters wird also der Sperrring gegenüber dem Sperrglied und dem Gewindering verdreht, bis die Raststellung der Rasteinrichtung gewechselt ist, so dass das Sperrglied aus den Sperrausnehmungen ausrückt und bei fortgesetzter Verdrehung des Stellringes eine gemeinsame verdrehung des Stellringes, des Sperrringes und des Gewinderinges mit dem Sperrglied gegenüber dem Futterkörper erfolgt, so dass die Spannbacken verstellt werden und das Bohrfutter sich öffnet. Die Zuordnung auch der Rasteinrichtung, oder zumindest eines Teils davon, zu dem Sperrring vereinfacht die Struktur und die Gestaltung der anderen Bauteile, insbesondere des Stellringes, so daß dieser auf seiner inneren Oberfläche nicht besonders geformt werden muss.

Es wird darauf hingewiesen, dass bei dem aus dem Stand der Technik bekannten Bohrfutter gemäß der EP 0 710 518 A2 der Stellring gegenüber dem Gewindering begrenzt verdrehbar ist, um das Sperrglied zwischen der Sperrstellung und der Lösestellung zu verstellen, wobei die Rasteinrichtung dazu dient, die beiden Drehlagen des Stellringes gegenüber dem Gewindering zu sichern. Bei dem erfindungsgemäßen Bohrfutter kann der Stellring gegenüber dem Gewindering auch zwei Drehlagen einnehmen, dies ist aber nicht mit einem Schalten des Sperrgliedes verbunden, wenn dieses wegen einer unterbliebenen Betätigung des Sperrringes permanent in der Lösestellung verbleibt. Wird der Sperrring zur Aktivierung der Sperreinrichtung verdreht, werden die zweiten Anschläge gewechselt. Zum Öffnen des Bohrfutters müssen die zweiten Anschläge aber nicht wieder gewechselt werden, da eine Relativdrehung des Stellringes gegenüber dem Gewindering möglich bleibt und dabei der Sperrring mitgenommen wird. Die Rasteinrichtung im Zusammenwirken mit den ersten Anschlägen gewährleistet damit durch die Festlegung der Drehlage des Stellringes eine Schleppfunktion für den Sperrring, wenn die Sperreinrichtung aktiviert ist.

Als besonders günstig hat es sich erwiesen, wenn der Sperrring drehbar an dem Stellring gelagert ist, da dies sowohl bei der Montage als auch bei der Betätigung Vorteile bietet, weil eine unmittelbare Zugänglichkeit des Sperrrings zum Futterkörper für die Lagerung nicht erforderlich ist. Die Anordnung des Sperrringes erfolgt dabei bevorzugt an einer der beiden axialen Enden des Stellringes, um bei diesem eine große Grifffläche für den Nutzer zu erhalten.

Bevorzugt ist es dabei, wenn der Sperrring radial außen am Stellring gelagert ist und die Gegenanschläge an einem auf dem Innenumfang des Sperrrings ausgebildeten Sperrnocken angeordnet sind. Bei dieser Ausführungsform kann ein ästhetisches Erscheinungsbild des Bohrfutters bewahrt bleiben, bei dem keine Strukturen des Sperrrings das Ergreifen des Stellringes behindern.

Alternativ ist auch die Möglichkeit gegeben, dass der Sperrring gegenüber dem Stellring radial innen geführt ist und diesen mit einem die Gegenanschläge bereitstellenden Griffnocken in einem Ringfenster durchgreift. Diese Ausführungsform stellt bei dem Stellring eine vergrößerte, sich axial länger erstreckende Grifffläche zur Verfügung, die lediglich für das Ringfenster zu unterbrechen ist. Für den Nutzer angenehmer ist es dabei, wenn der Griffnocken und das Ringfenster zweifach in diametraler Anordnung vorgesehen sind.

Weiterhin ist im Rahmen der Erfindung vorgesehen, dass zur Steuerung des Sperrglieds eine Steuerkurve an dem Nocken ausgebildet ist, wobei durch Verdrehen des Sperrrings relativ zum Stellring in dessen dem Schließen des Bohrfutters entsprechenden Drehrichtung das Sperrglied sich aus dem ausgerücktem Zustand in den eingerückten Zustand verstellt und umgekehrt.

Vorteilhaft ist es weiterhin, wenn das Sperrglied drehfest in einer mit dem Gewindering drehfest verbundenen Zwischenhülse angeordnet und an einem federbügel ausgebildet ist, der auch das Rastglied der Rasteinrichtung trägt da die gemeinsame Anordnung von dem Sperrglied und dem Rastglied in dem Federbügel in der Sperrstellung simultan die gewünschte erhöhte Federspannung erzeugt.

Die unterschiedlichen Raststellungen lassen sich in einfacher Weise erzielen, indem der Sperrring auf seiner innen liegenden Oberfläche einen Rastnocken trägt, der die beiden Raststellungen der Rasteinrichtung trennt.

Im folgenden wird die Erfindung an in der Zeichnung dargestellten Ausführungsbeispielen näher erläutert; es zeigen:
- Fig.: 1 ein Bohrfutter einer ersten Ausführungsform, links in einem Axialschnitt, rechts in einer Seitenansicht, jeweils in der Stellung der Spannbacken bei geringstem Spanndurchmesser und dem ungesperrten Futterzustand dargestellt,
- Fig. 2a: den Schnitt II-II aus Fig. 1 im geöffneten, entriegelten Zustand des Bohrfutters,
- Fig. 2b: den Schnitt II-II aus Fig. 1 im gespannten, entriegelten Zustand des Bohrfutters,
- Fig. 2c: den Schnitt II-II aus Fig. 1 im gespannten, verriegelten Zustand des Bohrfutters,
- Fig. 3a: den Schnitt III-III aus Fig. 1 im geöffneten, entriegelten Zustand des Bohrfutters,
- Fig. 3b: den Schnitt. III-III aus Fig. 1 im gespannten, entriegelten Zustand des Bohrfutters,
- Fig. 3c: den Schnitt III-III aus Fig. 1 im gespannten, verriegelten Zustand des Bohrfutters,
- Fig.: 4 eine der Fig. 1 entsprechende Darstellung einer zweiten Ausführungsform mit einem axial rückwärtigen Sperrring,
- Fig. 5a: den Schnitt V-V aus Fig. 4 im der Figur 3a entsprechenden Spannungszustand,
- Fig. 5b: den Schnitt V-V aus Fig. 4 im der Figur 3b entsprechenden Spannungszustand, und
- Fig. 5c: den Schnitt V-V aus Fig. 4 im der Figur 3c entsprechenden Spannungszustand,

Die in der Zeichnung dargestellten Bohrfutter dienen zur Aufnahme eines nicht dargestellten Werkzeugs und besitzen einen Futterkörper 1 zum Anschluss an eine ebenfalls nicht dargestellte Bohrspindel. Zum Anschluss der Bohrspindel besitzt der Futterkörper 1 eine Gewindeaufnahme 2. Die Bohrfutter 1 besitzen weiterhin das Werkzeug zentrierende, axial führende und/oder einspannende Spannbacken 3, die in der zur Futterachse 4 koaxialen Werkzeugaufnahme 5 zentrisch zur Futterachse 4 verstellbar sind. Zu dieser Verstellung dient ein mit einem Gewindering 6 verbundener Stellring 15. Der Gewindering 6 ist am Futterkörper 1 drehbar geführt und axial nach hinten über ein Kugellager 7 und einen Druckring 8 am Futterkörper 1 abgestützt. Um unerwünschte Verstellungen der Spannbacken 3 zu verhindern, kann die Drehstellung des Gewinderings 6 fixiert werden, wozu eine zwischen dem Gewindering 6 und dem Futterkörper 1 ausgebildete Sperreinrichtung dient, die aus einem koaxialen Kranz von Sperrausnehmungen 9 und aus einem Sperrglied 10 besteht, wobei der eine Teil der Sperreinrichtung dem Futterkörper 1 und der andere Teil dem Gewindering 6 zugeordnet ist; bei den in der Zeichnung dargestellten Ausführungsbeispielen nämlich die Sperrausnehmungen 9 dem Futterkörper 1 und das Sperrglied 10 dem Gewindering 6. In der Sperrstellung greift das Sperrglied 10 unter der Kraft einer Sperrfeder 11 in die Sperrausnehmungen 9, wobei das Sperrglied 10 und die dieses aufnehmenden Sperrausnehmungen 9 einander in derart geneigten Flankenflächen anliegen, dass diese den Gewindering 6 in der dem Öffnen des Bohrfutters entsprechenden Drehrichtung (Pfeil 12) gegen Verdrehen verriegeln, beim Verdrehen des Gewinderings 6 mit einem dazu ausreichend großen Drehmoment in der entgegengesetzten, also dem Schließen des Bohrfutters entsprechenden Drehrichtung (Pfeil 13), das Sperrglied 10 aber gegen die Federkraft aus den Sperrausnehmungen 9 herausdrücken und von Sperrausnehmung 9 zu Sperrausnehmung 9 entlang dem Umfang des Futterkörpers 1 verrutschen lassen.

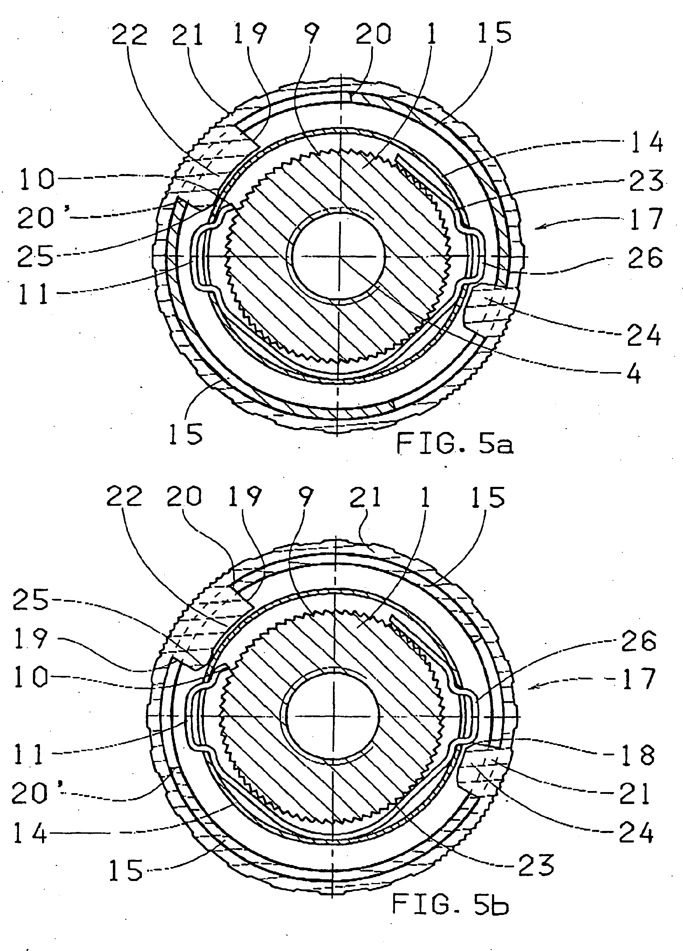

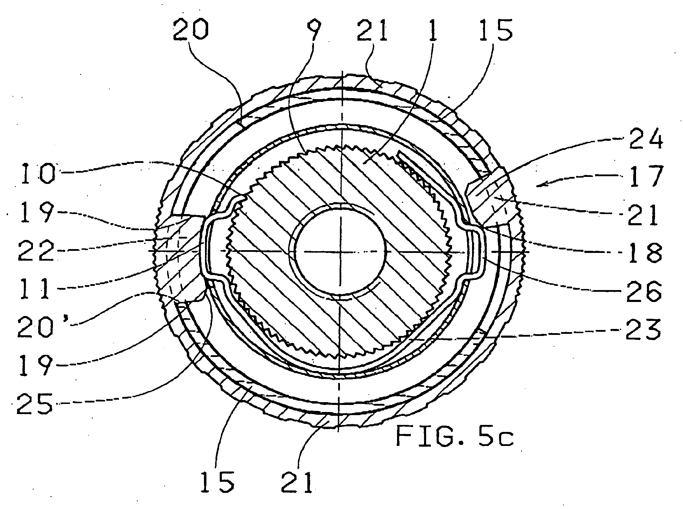

Das Sperrglied 10 ist drehfest in einer drehfest mit dem Gewindering 6 verbundenen Zwischenhülse 14 angeordnet, also selber drehfest mit dem Gewindering 6 verbunden, wobei die Drehlage des Stellrings 15 gegenüber dem Gewindering 6 mit der Zwischenhülse 14 und dem Sperrglied 10 zwischen zwei ersten Anschlägen 16 verstellbar ist. Der Sicherung dieser beiden Drehlagen des Stellrings 15 relativ zum Gewindering 6 dient eine Rasteinrichtung 17 mit zwei in Umfangsrichtung beabstandet angeordneten Raststellungen 18 für ein Rastglied 26. Das Sperrglied 10 kann zwischen seinen in den Sperrausnehmungen 9 eingerückten Zustand in der Sperrstellung und seinem aus dem ausgerücktem Zustand in der Lösestellung verstellt werden, wozu ein mit Gegenanschlägen 19 zwischen zweiten Anschlägen 20, 20` des Stellringes begrenzt verdrehbarer Sperrring 21 vorhanden ist, der in der dem Öffnen des Bohrfutters entsprechenden Drehrichtung 12 mit seinem Gegenanschlag 19 dem vorderen zweiten Anschlag 20' des Sperrringes 21 in der Sperrstellung anliegt (Fig. 5). Zwischen dem Sperrring 21 und dem Gewindering 6, nämlich der drehfest mit dem Gewindering 6 verbundenen Zwischenhülse 14 mit dem Federbügel 23, ist die Rasteinrichtung 17 ausgebildet, wozu der Sperrring 21 auf seiner innen liegenden Oberfläche einen Rastnocken 24 trägt, der die Raststellungen 18 trennt.

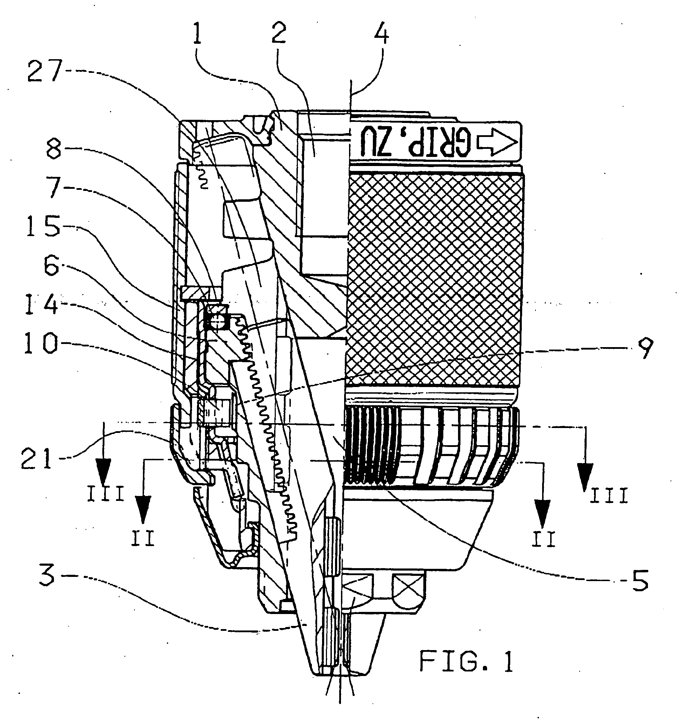

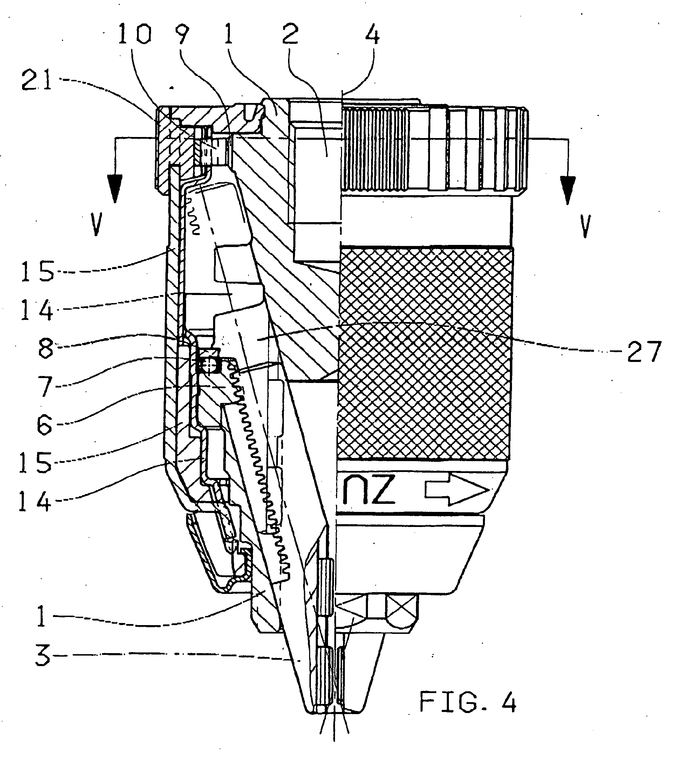

Die Fig. 1 und 4 lassen erkennen, dass der Sperrring 21 drehbar an dem Stellring 15 gelagert ist, und zwar radial außen am Stellring 15, wobei die Gegenanschläge 19 an einem auf dem Innenumfang des Sperrrings 21 ausgebildeten Sperrnocken 22 angeordnet sind. Denkbar ist es aber gleichfalls, ein erfindungsgemäßes Bohrfutter zu realisieren, bei dem der Sperrring 21 gegenüber dem Stellring 15 radial innen geführt ist und diesen mit einem die Gegenanschläge 19 bereitstellenden Griffnocken in einem Ringfenster durchgreift, wobei sowohl der Griffnocken als auch das Ringfenster zweifach in diametraler Anordnung vorhanden sein können.

Zur Steuerung des Sperrglieds 10 ist eine Steuerkurve 25 an den Nocken 22 ausgebildet ist, wobei durch Verdrehen des Sperrrings 21 relativ zum Stellring 15 in dessen dem Schließen des Bohrfutters entsprechenden Drehrichtung 13 das Sperrglied 10 sich aus dem ausgerückten Zustand in den eingerückten Zustand verstellt und umgekehrt.

Der grundsätzliche Aufbau und die Funktionsweise dieser Bohrfutter ist aus der EP 0 710 518 A2 bekannt und dem einschlägigen Durchschnittsfachmann verständlich, so dass nachfolgend bei der Erläuterung der Funktionsweise der in der Zeichnung dargestellten Bohrfutter nur auf die sich aus der Erfindung ergebenden Unterschiede verwiesen wird.

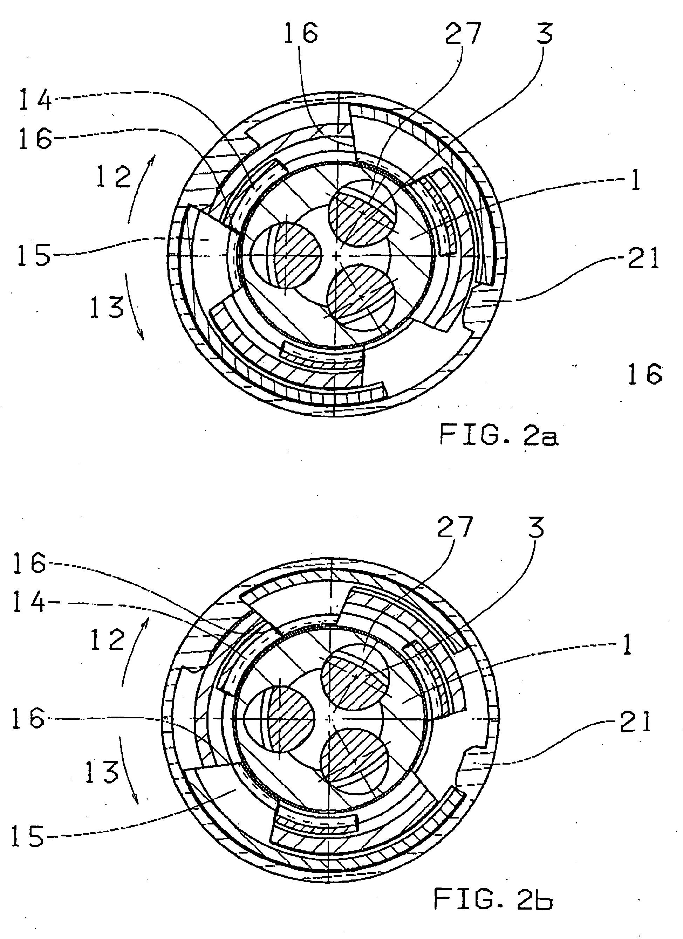

Die Fig. 1, 2a und 3a zeigen ein von Hand zu spannendes Bohrfutter im geöffneten, entriegelten Zustand. Zum Einspannen des Schaftes eines Werkzeuges wird der Stellring 15 ergriffen und in Richtung des Pfeiles 13 verdreht, wobei die Anschläge 16 wechseln und die Zwischenhülse 14 mit dem Gewindering 6 mitgenommen wird.

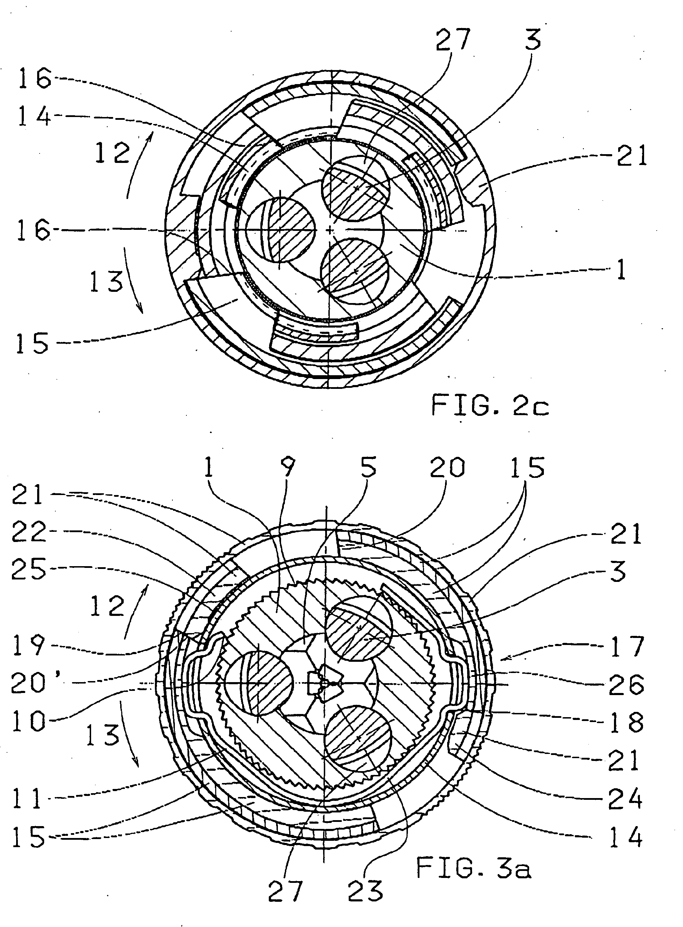

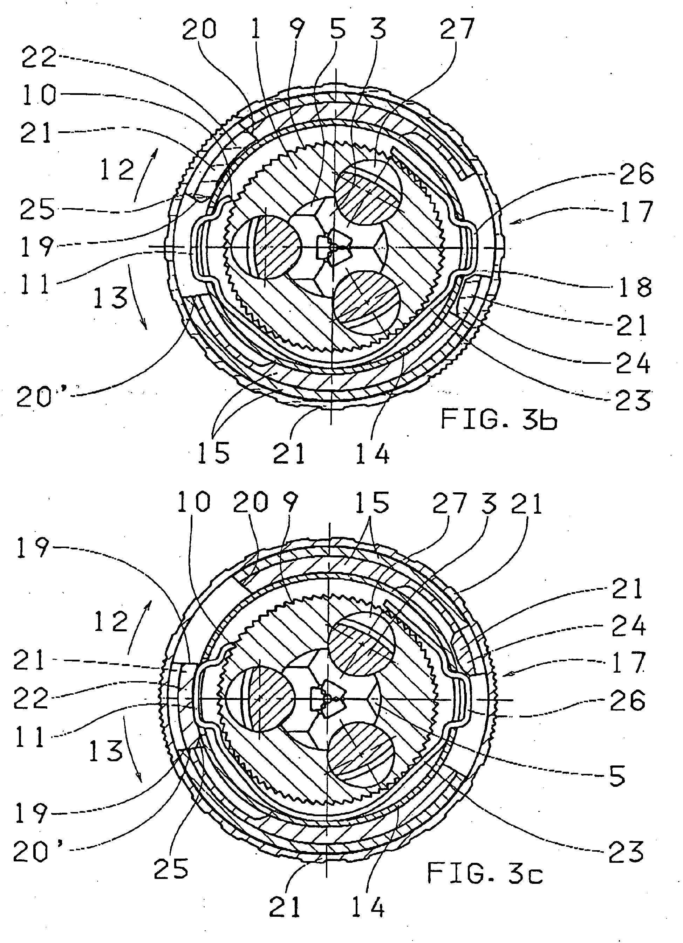

Dabei legen sich die zweiten Anschläge 20 den Gegenanschlägen 19 an (Fig. 3b). Nun kann nach dem Willen des Nutzers der Sperrring 21 verdreht werden. Dadurch wechseln auch wieder die zweiten Anschläge 20 und die Gegenanschläge 19, so dass der Weg zur Verstellung des Sperrringes 21 und Betätigung der Sperreinrichtung beim Öffnen wieder zur Verfügung steht, also bei einer Verdrehung des Stellringes 15 in Öffnungsrichtung (12) der Zustand aus Fig. 3a wieder erreicht wird.

Korrespondierend dazu erfolgt auch ein Wechsel des Rastgliedes 26 der Rasteinrichtung 17 zwischen den beiden Raststellungen. 18, so dass ausgehend von der Fig. 3b der von der Fig. 3c dargestellte Zustand erreicht wird, der den gespannten Zustand des Bohrfutters zeigt, wenn die Spannbacken 3 sich dem Schaft des Werkzeugs anlegen. Eine Erhöhung der Spannkraft ist unverändert möglich, da die Verdrehung des Stellringes 15 in Spannrichtung 13 nicht behindert ist.

Zwar ist grundsätzlich dieser Wechsel zwischen der Lösestellung und der Sperrstellung auch möglich, bevor der Spannvorgang mit dem Erreichen der maximalen Spannkraft abgeschlossen ist, jedoch wird sinnvollerweise dieser Schaltvorgang erst nach Erreichen der gewünschten Spannkraft ausgeführt, da andernfalls das Sperrglied 10 über die Sperrausnehmungen 9 zum fortgesetzten Spannen ratschen müßte, was auch die Höhe der maximal erreichbaren Spannkraft beeinträchtigt, die also bei dem in der Zeichnung dargestellten Bohrfuttern prinzipiell höher ist als bei den vorbekannten Bohrfuttern, bei denen die Sperreinrichtung zwingend beim Spannvorgang mit betätigt werden muss und so zu gewissen Reibungsverlusten führt.

Ist das Werkzeug zwischen den Spannbacken 3 gespannt, kann der Nutzer durch Verdrehen des Sperrringes 21 in derselben Drehrichtung 13, in der zuvor der Stellring 15 verdreht worden ist, die Sperreinrichtung betätigen, muss dies aber nicht. Betätigt der Nutzer die Sperreinrichtung, verstellt sich der Sperrring 21 gegenüber den zweiten Anschlägen 20, 20' des Stellringes 15 und läßt dabei durch die Beaufschlagung mit der Steuerkurve 25 des Nockens 22 das Sperrglied 10 in die Sperrausnehmungen 9 des Futterkörpers 1 eingreifen.

Zum Öffnen des Bohrfutters und Wechseln des Werkzeuges ergreift der Nutzer lediglich den Stellring 15 und verdreht diesen in der gegenüber dem Spannen entgegengesetzten Drehrichtung, nämlich in Richtung des Pfeiles 12, wobei der Nutzer dies unabhängig davon ausführen kann, welche Konfiguration vorliegt, also unabhängig davon, ob der in Fig. 3b dargestellte Zustand, der insbesondere zum Schrauben geeignet ist, oder der in Fig. 3c dargestellte Zustand vom Nutzer gewählt worden ist. Der Nutzer ist also nicht gezwungen, zum Öffnen des Bohrfutters zuvor den Sperrring 21 zu betätigen, weil dieser durch den Stellring 15 mitgenommen wird, wenn ausgehend von Fig. 3c durch Verdrehen des Stellrings 15 der in Fig. 3a dargestellte Betriebszustand erreicht wird,
wobei die relative Verdrehung des Stellringes 15 mit dem Sperrring 21 gegenüber dem Gewindering 6 das Entriegeln ermöglicht. Dieser Betriebszustand wird auch erreicht, wenn die Sperreinrichtung nicht aktiviert ist, das Bohrfutter also zwar gespannt, aber entriegelt ist (Fig. 3b), da durch die begrenzte Verdrehbarkeit des Stellringes 15 gegenüber dem Gewindering 6 mit der Zwischenhülse 14 zunächst die zweiten Anschläge 20, 20' wechseln können und dann das fortgesetzte Öffnen des Spannfutters erfolgt.

### Bezugszeichenliste

- 1: Futterkörper
- 2: Gewindeaufnahme
- 3: Spannbacken
- 4: Futterachse
- 5: Werkzeugaufnahme
- 6: Gewindering
- 7: Kugellager
- 8: Druckring
- 9: Sperrausnehmungen
- 10: Sperrglied
- 11: Sperrfeder
- 12: Pfeil für Öffnungsrichtung
- 13: Pfeil für Schliessrichtung
- 14: Zwischenhülse
- 15: Stellring
- 16: erste Anschläge
- 17: Rasteinrichtung
- 18: Raststellungen
- 19: Gegenanschlägen
- 20: zweite Anschläge
- 21: Sperrring
- 22: Sperrnocken
- 23: Federbügel
- 24: Rastnocken
- 25: Steuerkurve
- 26: Rastglied

## Patentansprüche

1. Bohrfutter, insbesondere zum Schlagbohren, mit einem an eine Bohrspindel anschließbaren Futterkörper (1), in dem in geneigt zur Futterachse (4) verlaufenden Führungsaufnahmen (27) zwischen sich eine Aufnahme für das Bohrwerkzeug bildende Spannbacken (3) angeordnet sind, die mit einer Zahnreihe zum Öffnen und Schließen des Bohrfutters in das Gewinde eines am Futterkörper (1) drehbar geführten Gewinderings (6) eingreifen, ferner mit einer Sperreinrichtung für den Gewindering (6), bestehend aus einem koaxialen Kranz von Sperrausnehmungen (9) und aus mindestens einem Sperrglied (10), das in der Sperrstellung unter der Kraft einer Sperrfeder (11) in die Sperrausnehmungen (9) eingerückt ist, wobei das Sperrglied (10) und die Sperrausnehmungen (9) einander in derart geneigten Flankenflächen anliegen, daß diese den Gewindering (6) in der dem Öffnen des Bohrfutters entsprechenden Drehrichtung (12) gegen Verdrehen sperren, beim Verdrehen des Gewinderings (6) in der entgegen gesetzten, also dem Schließen des Bohrfutters entsprechenden Drehrichtung (13) aber das Sperrglied (10) gegen die Kraft der Sperrfeder aus den Sperrausnehmungen (9) herausdrücken und dadurch von Sperrausnehmung (9) zu sperrausnehmung (9) verrutschen lassen, weiter mit einem zwischen ersten Anschlägen (16) begrenzt gegenüber dem Gewindering (6) verdrehbaren koaxialen Stellring (15), und mit einer in Umfangsrichtung zwei Raststellungen (18) für den Stellring (15) bildenden Rasteinrichtung (17), **dadurch gekennzeichnet, daß** ein mit Gegenanschlägen (19) zwischen zweiten Anschlägen (20, 20') des Stellringes (15) begrenzt verdrehbarer Sperrring (21) zur Verstellung des Sperrgliedes (10) zwischen der Sperrstellung und der dem aus den Sperrausnehmungen (9) ausgerückten Zustand des Sperrgliedes (10) entsprechenden Lösestellung vorgesehen ist, dass der in der dem Öffnen des Bohrfutters entsprechenden Drehrichtung (12) vordere zweite Anschlag (20') in der Sperrstellung dem Gegenanschlag (19) anliegt, und dass die Rasteinrichtung (17) zwischen dem Sperrring (21) und dem Gewindering (6) ausgebildet ist.

2. Bohrfutter nach Anspruch 1, **dadurch gekennzeichnet, daß** der Sperrring (21) drehbar an dem Stellring (15) gelagert ist.

3. Bohrfutter nach Anspruch 2, **dadurch gekennzeichnet, daß** der Sperrring (21) radial außen am Stellring (15) gelagert ist und die Gegenanschläge (19) an einem auf dem Innenumfang des Sperrrings (21) ausgebildeten Sperrnocken (22) angeordnet sind.

4. Bohrfutter nach Anspruch 2, **dadurch gekennzeichnet, daß** der Sperrring (21) gegenüber dem Stellring (15) radial innen geführt ist und diesen mit einem die Gegenanschläge (19) bereitstellenden Griffnocken in einem Ringfenster durchgreift.

5. Bohrfutter nach Anspruch 3 oder 4, **dadurch gekennzeichnet, daß** zur Steuerung des Sperrglieds (10) eine Steuerkurve (25) an dem Nocken (22, 23) ausgebildet ist, wobei durch Verdrehen des Sperrrings (21) relativ zum Stellring (15) in dessen dem Schließen des Bohrfutters entsprechenden Drehrichturig (13) das Sperrglied (10) sich aus dem ausgerückten Zustand in den eingerückten Zustand verstellt und umgekehrt.

6. Bohrfutter nach einem der Ansprüche 1 bis 5, **dadurch gekennzeichnet, daß** das Sperrglied (10) drehfest in einer mit dem Gewindering (6) drehfest verbundenen Zwischenhülse (14) angeordnet und an einem Federbügel (23) ausgebildet ist, der auch das Rastglied (26) der Rasteinrichtung (17) trägt.

7. Bohrfutter nach Anspruch 6, **dadurch gekennzeichnet, daß** der Sperrring (21) auf seiner radial innen liegenden Oberfläche einen Rastnocken (24) trägt, der die beiden Raststellungen (18) der Rasteinrichtung (17) trennt.

8. Bohrfutter nach einem der Ansprüche 1 bis 7, **dadurch gekennzeichnet, daß** der Sperrring (21) am axial vorderen Ende des Stellringes (15) angeordnet ist.

9. Bohrfutter nach einem der Ansprüche 1 bis 7, **dadurch gekennzeichnet, daß** der Sperrring (21) am axial rückwärtigem Ende des Futterkörpers (1) angeordnet ist.

## Claims

1. A drill chuck, in particular for hammer drilling, comprising a chuck body (1) which is connectable to a drilling spindle and in which there are arranged in guide receiving means (27) extending inclinedly relative to the chuck axis (4) clamping jaws (3) which between them form a receiving means for the drilling tool and which engage with a row of teeth for opening and closing the drill chuck into the screwthread of a screwthreaded ring (6) guided rotatably on the chuck body (1), and further comprising a locking device for the screwthreaded ring (6) comprising a coaxial ring of locking recesses (9) and at least one locking member (10) which in the locking position is engaged into the locking recesses (9) under the force of a locking spring (11), wherein the locking member (10) and the locking recesses (9) bear against each other in flank surfaces inclined in such a way that they lock the screwthreaded ring (6) to prevent rotation thereof in the direction of rotation (12) corresponding to opening of the drilling chuck, but upon rotation of the screwthreaded ring (6) in the opposite direction of rotation (13) therefore corresponding to closing the drilling chuck they urge the locking member (10) out of the locking recesses (9) against the force of the locking spring and thereby allow slipping movement from one locking recess (9) to another, and further comprising a coaxial adjusting ring (15) which is limitedly rotatable with respect to the screwthreaded ring (6) between first abutments (16), and a latching device (17) which in the peripheral direction forms two latching positions (18) for the adjusting ring (15), **characterised in that** there is provided a locking ring (21) which is limitedly rotatable with counterpart abutments (19) between second abutments (20, 20') of the adjusting ring (15) for displacement of the locking member (10) between the locking position and the release position corresponding to the condition of the locking member (10) of being disengaged from the locking recesses (9), the second abutment (20') which is at the front in the direction of rotation (12) corresponding to opening of the drill chuck bears in the locking position against the counterpart abutment (19), and the latching device (17) is provided between the locking ring (21) and the screwthreaded ring (6).

2. A drill chuck according to claim 1 **characterised in that** the locking ring (21) is mounted rotatably on the adjusting ring (15).

3. A drill chuck according to claim 2 **characterised in that** the locking ring (21) is mounted radially outwardly on the adjusting ring (15) and the counterpart abutments (19) are arranged on a locking cam (22) provided on the inner periphery of the locking ring (21).

4. A drill chuck according to claim 2 **characterised in that** the locking ring (21) is guided radially inwardly with respect to the adjusting ring (15) and engages through same with a gripping cam providing the counterpart abutments (19) in an annular window.

5. A drill chuck according to claim 3 or claim 4 **characterised in that** to control the locking member (10) a control cam configuration (25) is provided on the cam (22, 23), wherein rotation of the locking ring (21) relative to the adjusting ring (15) in its direction of rotation (13) corresponding to closing the drilling chuck provides that the locking member (10) is displaced from the disengaged condition into the engaged condition and vice-versa.

6. A drill chuck according to one of claims 1 to 5 **characterised in that** the locking member (10) is arranged non-rotatably in an intermediate sleeve (14) connected non-rotatably to the screwthreaded ring (6) and is provided on a spring loop (23) which also carries the latching member (26) of the latching device (17).

7. A drill chuck according to claim 6 **characterised in that** on its radially inwardly disposed surface the locking ring (21) carries a latching cam (24) which separates the two latching positions (18) of the latching device (17).

8. A drill chuck according to one of claims 1 to 7 **characterised in that** the locking ring (21) is arranged at the axially forward end of the adjusting ring (15).

9. A drill chuck according to one of claims 1 to 7 **characterised in that** the locking ring (21) is arranged at the axially rearward end of the chuck body (1).

## Revendications

1. Mandrin porte-foret, en particulier pour le perçage à percussion, comprenant un corps de mandrin (1) qui peut être raccordé à une broche de perçage et dans lequel des mors de serrage (3), disposés dans des logements de guidage (27) inclinés par rapport à l'axe de mandrin (4), forment entre eux un logement pour l'outil de perçage et s'engagent avec une rangée de dents dans le filet d'une bague filetée (6) guidée avec possibilité de rotation sur le corps de mandrin (1), en vue de l'ouverture et de la fermeture du mandrin porte-foret, comprenant en outre un dispositif de verrouillage pour la bague filetée (6), qui est constitué d'une couronne coaxiale d'échancrures de verrouillage (9) et d'au moins un organe de verrouillage (10) qui, dans la position verrouillée, est engagé dans les échancrures de verrouillage (9), sous l'action de la force d'un ressort de verrouillage (11), l'organe de verrouillage (10) et les échancrures de verrouillage (9) étant appliqués les uns contre les autres dans des surfaces de flancs inclinées de manière telle qu'ils bloquent la bague filetée (6) en rotation, dans le sens de rotation (12) correspondant à l'ouverture du mandrin porte-foret mais, lors de la mise en rotation de la bague filetée (6) dans le sens opposé, c'est-à-dire dans le sens de rotation (13) correspondant à la fermeture du mandrin, repoussent l'organe de verrouillage (10) hors des échancrures de verrouillage (9), à l'encontre de la force du ressort de verrouillage, et le fassent ainsi glisser d'échancrure (9) en échancrure (9), comprenant en outre une bague de manoeuvre (15) coaxiale, pouvant être tournée de façon limitée par rapport à la bague filetée (6), entre des premières butées (16), et comprenant un dispositif d'encliquetage (17) formant deux positions d'encliquetage (18) pour la bague de manoeuvre (15), dans la direction périphérique, **caractérisé par le fait qu'**il est prévu une bague de blocage (21) qui peut être tournée de façon limitée avec des contre-butées (19) entre des deuxièmes butées (20, 20') de la bague de manoeuvre (15), en vue du déplacement de l'organe de verrouillage (10) entre la position verrouillée et la position libérée, correspondant à l'état où l'organe de verrouillage (10) est dégagé des échancrures de verrouillage (9), **par le fait que** la deuxième butée avant (20'), vu dans le sens de rotation (12) correspondant à l'ouverture du mandrin porte-foret, est appliquée sur la contre-butée (19) dans la position de verrouillage, et **par le fait que** le dispositif d'encliquetage (17) est réalisé entre la bague de blocage (21) et la bague filetée (6).

2. Mandrin porte-foret selon la revendication 1, **caractérisé par le fait que** la bague de blocage (21) est montée avec possibilité de rotation sur la bague de manoeuvre (15).

3. Mandrin porte-foret selon la revendication 2, **caractérisé par le fait que** la bague de blocage (21) est montée radialement à l'extérieur sur la bague de manoeuvre (15) et les contre-butées (19) sont aménagées sur une came de blocage (22) réalisée sur le pourtour intérieur de la bague de verrouillage (21).

4. Mandrin porte-foret selon la revendication 2, **caractérisé par le fait que** la bague de blocage (21) est guidée radialement à l'intérieur par rapport à la bague de manoeuvre (15) et traverse cette dernière dans une fenêtre de bague, avec une came d'engagement comportant les contre-butées (19).

5. Mandrin porte-foret selon la revendication 3 ou 4, **caractérisé par le fait que** pour commander l'organe de verrouillage (10), une surface courbe de commande (25) est prévue sur la came (22, 23), la rotation de la bague de blocage (21) par rapport à la bague de manoeuvre (15), dans le sens de rotation (13) de celle-ci qui correspond à la fermeture du mandrin porte-foret, ayant pour effet que l'organe de verrouillage (10) se déplace de sa position dégagée à sa position engagée et inversement.

6. Mandrin porte-foret selon une des revendications 1 à 5, **caractérisé par le fait que** l'organe de verrouillage (10) est disposé de façon solidaire en rotation dans un manchon intermédiaire (14), relié de façon solidaire en rotation à la bague filetée (6), et est réalisé sur un ressort en étrier (23) qui porte également l'organe d'encliquetage (26) du dispositif d'encliquetage (17).

7. Mandrin porte-foret selon la revendication 6, **caractérisé par le fait que** la bague de blocage (21) porte sur sa surface radialement intérieure une came d'encliquetage (24) qui sépare les deux positions d'encliquetage (18) du dispositif d'encliquetage (17).

8. Mandrin porte-foret selon une des revendications 1 à 7, **caractérisé par le fait que** la bague de blocage (21) est disposée à l'extrémité axialement avant de la bague de manoeuvre (15).

9. Mandrin porte-foret selon une des revendications 1 à 7, **caractérisé par le fait que** la bague de blocage (21) est disposée à l'extrémité axialement arrière du corps de mandrin (1).
